# EUROPEAN PATENT SPECIFICATION

(11) **EP 1 330 734 B1**
(45) Date of publication and mention of the grant of the patent: **09.06.2004**
(21) Application number: 01950100.6
(22) Date of filing: 02.07.2001
(51) Int. Cl.: G06F 17/14

(54) **METHOD FOR EXECUTING A LINEAR TRANSFORMATION**
VERFAHREN ZUR LINEAREN TRANSFORMATIONSAUSFÜHRUNG
PROCEDE D'EXECUTION D'UNE TRANSFORMATION LINEAIRE

(30) Priority: 27.10.2000 WO PCT/NL00/00780
(43) Date of publication of application: 30.07.2003
(73) Proprietor: Scholz, John A., 2597 CR Den Haag (NL)
(72) Inventor: Scholz, John A., 2597 CR Den Haag (NL)
(86) International application number: PCT/NL2001/000501
(87) International publication number: WO 2002/035379

(56) References cited:
- US-A- 5 825 420
- HALBERTEIN J.: "RECURSIVE COMPLEX FOURIER ANALYSIS FOR REAL TIME APPLICATIONS" PROC. IEEE LETTERS, vol. 54, June 1966 (1966-06), page 903 XP000979360
- SPRINGER T: "SLIDING FFT COMPUTES FREQUENCY SPECTRA IN REAL TIME" EDN ELECTRICAL DESIGN NEWS,US,CAHNERS PUBLISHING CO. NEWTON, MASSACHUSETTS, vol. 33, no. 20, 29 September 1988 (1988-09-29), pages 161-166,168,17, XP000111000 ISSN: 0012-7515
- HOSTETTER G H: "Recursive discrete Fourier transformation" IEEE TRANSACTIONS ON ACOUSTICS, SPEECH AND SIGNAL PROCESSING, APRIL 1980, USA, vol. ASSP-28, no. 2, pages 184-190, XP000979337 ISSN: 0096-3518
- STULLER J A: "Generalized running discrete transforms" IEEE TRANSACTIONS ON ACOUSTICS, SPEECH AND SIGNAL PROCESSING, FEB. 1982, USA, vol. ASSP-30, no. 1, pages 60-68, XP000979339 ISSN: 0096-3518
- HEIMAN A ET AL: "A UNIVERSAL REAL-TIME TRANSFORMER FOR IMAGE CODING" PROCEEDINGS OF THE REGION 10 CONFERENCE. (TENCON),US,NEW YORK, IEEE, vol. CONF. 3, 25 August 1987 (1987-08-25), pages 595-599, XP000011964
- SUN M T ET AL: "A CONCURRENT ARCHITECTURE FOR VLSI IMPLEMENTATION OF DISCRETE COSINE TRANSFORM" IEEE TRANSACTIONS ON CIRCUITS AND SYSTEMS,US,IEEE INC. NEW YORK, vol. 34, no. 8, 1 August 1987 (1987-08-01), pages 992-994, XP000007255

## Description

The invention relates to a method for performing an N-points linear transformation with N = 2, 3,..., upon a row of numbers X₁,..,X_{N}, which N-points transformation can be performed by multiplying the row of numbers with a matrix, which matrix has the property that the (i-1)^{th} column can be obtained from the i^{th} column of the same matrix by multiplying the i^{th} column with a fixed correction vector. Amongst others, the Discrete Fourier Transform (DFT) is known to have this property.

Large transformations of this type, and most notably the Fourier transformations, are ubiquitous to all fields of engineering and science, such as medical science, telecommunications, and radar design. The most implemented method for generating this transformation is the Fast Fourier Transform algorithm, see Springer T.: "Sliding FFT computes frequency spectra in real time", EDN-Electrical Design News, Newton, MA, USA, vol. 33, no. 20, 29.9. 1988, pages 161-170. Within the limits set by computer hardware and allowable computing time, the Fast Fourier Transform is an efficient mathematical method for computing a Fourier transformation of any desired length. In practice, however, these hardware and time limits usually result in a step-wise application of the algorithm, whereby data blocks that are only partially overlapping in time are input to the algorithm. This practice can pollute the final result. For example, a radar echo or a sonar echo can straddle two adjoining data blocks, creating transient effects in the Fast Fourier Transform result that would interfere with detection.

For transformations with the special property that the (i-1)^{th} column can be obtained from the i^{th} column of the same matrix by multiplying the i^{th} column with a fixed correction vector, it is not necessary to perform an entire new calculation when a new measurement value is added and the oldest measurement value is deleted. Instead, it is possible to obtain a transformation of a row of numbers Xᵢ₊₁,..,X_{i+N} from a previously computed transformation of a row of numbers Xᵢ,..,X_{i+N-1} by correcting this previously computed transformation. This known correction procedure contains the steps of subtracting from the previously computed transformation the product of Xᵢ and the first column of the matrix, multiplying the result by the correction vector and adding the product of X_{i+N} and the last column of the matrix. In this way a new transformation is obtained by only 3xN parallel sets of multiplications. In the case of the DFT, where the first column in the transformation matrix is always a column of ones, only 2xN parallel sets of multiplications are needed. The elements of the correction vector can be gained simply by dividing the elements of the first column of the transformation matrix by the corresponding elements of the second column of the transformation matrix.

It is also possible to continuously produce a new transformation for every k new measurement values, where k = 1, 2,.., by modifying the previous transformation in an analogous manner. It is possible then to obtain a transformation of a row of numbers Xᵢ₊ₖ, ..,X_{i+N-1+k} from a previously computed transformation of a row of numbers Xᵢ,..,X_{i+N-1} by correcting this previously computed transformation. The correction procedure contains the steps of subtracting from the previously computed transformation the product of Xᵢ and the first column,.., until the product of Xᵢ₊ₖ₋₁ and the k^{th} column of the matrix, then multiplying the result by a k-correction vector and then adding the product of X_{i+N} and the (N-k+1)^{th} column,.., until the product of X_{i+N-1+k} and the last column of the matrix. The elements of the k-correction vector can be gained by dividing the elements of the first column of the transformation matrix by the corresponding elements of the (k+1)^{th} column of the transformation matrix.

Most transformations, and in particular the Fourier transformation, are used almost exclusively in combination with a weighting function, and more in particular with a symmetrical weighting function, in order to suppress side lobes in the transform results. It can easily be understood that transformations with symmetrical weighting functions do not have the property that the (i-1)^{th} column can be obtained from the i^{th} column of the same matrix by multiplying the i^{th} column with a fixed correction vector. This is probably the reason why the known correction procedure has never drawn much attention.

The present invention does relate to a method for performing an N-point linear weighted transformation with N=2, 3,..., upon a row of numbers X₁,..,X_{N}, which N-points transformation can be performed by multiplying the row of numbers with a weighted matrix, for which the unweighted matrix has the property that the (i-1)^{th} column can be obtained from the i^{th} column of the same matrix by multiplying the i^{th} column with a fixed correction vector. The inventive method is characterized in that a weighted transformation can be realised or approximated by a sum of at least a partial transformation U', a partial transformation U", and a partial transformation kU, in such a way that each partial transformation has the property that an (i-1)^{th} column from a matrix that represents the partial transformation can be obtained from the i^{th} column of the same matrix by multiplying the i^{th} column with a fixed correction vector. The elements of the correction vector of a partial transformation can be obtained by dividing the elements of the first column of the partial transformation matrix by the corresponding elements of the second column of the partial transformation matrix.

A first favourable embodiment of the inventive method is characterized in that the matrix of the partial transformation U' is obtained by multiplying the successive columns with powers of a real constant C, with C<1, and that the matrix of the partial transformation U'' is obtained by multiplying the successive columns with powers of a real constant C⁻¹. This results in two asymmetrically weighted matrices of which the sum is symmetrical. The matrix KU can be used for normalizing the result.

A second favourable embodiment of the inventive method is characterized in that the matrix of the partial transformation U' is obtained by multiplying the successive columns with powers of a complex number D, with D= e^{jx} and that the matrix of the partial transformation U'' is obtained by multiplying the successive columns with powers of D⁻¹. Each of both matrices obviously has the desired property and the sum of these two matrices with the complex conjugated weightings results in a real weighting with some trigoniometric function. The matrix KU can be used for normalizing the result.

A favourable embodiment of this inventive method is characterized in that D= e^{j2π/(N+1)}, for obtaining a well known Hanning weighting.

A favourable embodiment according to another aspect of the invention is characterized in that the calculation of a partial transformation contains the steps of subtracting from the previously computed transformation the product of Xᵢ and the first column of the matrix and adding the product of X_{i+N} and the next column of an extended matrix, of which added columns have the property that the (i+1)^{th} column can be obtained from the i^{th} column of the same matrix by multiplying the i^{th} column with a vector which is the inverse of the fixed correction vector. This method may be used advantageously when the phase of the transform result is not important, which is true for most applications, and it saves one set of multiplications for each partial transformation.

Another very favourable embodiment of the invention, which may for some applications even further reduce the number of calculations, is characterized in that a row of M-bits binary numbers X₁,..,X_{N},... is split-up in M rows of one bit binary numbers, that a transformation is performed separately on each of the M rows and that the results are combined in a weighted addition. The advantage is that the three sets of multiplications and three sets of additions, necessary for correcting the previously obtained result, collapse to one multiplication and two conditional additions. If the phase of the transform result is not important, then the correction can be left out, which saves one conditional addition.

The invention also relates to a linear transformer, designed for the execution of a method as described above, and more in particular for the execution of a Fourier transformation.

The invention will now be illustrated with reference to the following figures, where:
- Fig. 1: represents a linear transformer following the current state of the art;
- Fig. 2: represents the weighting of matrices U', U'', and U'''with real weighting values;
- Fig. 3A: represents a weighted transformer with real weighting values;
- Fig. 3B: represents a weighted transformer with complex weighting values;
- Fig. 4: represents a linear transformation which is split-up in M partial transformations.

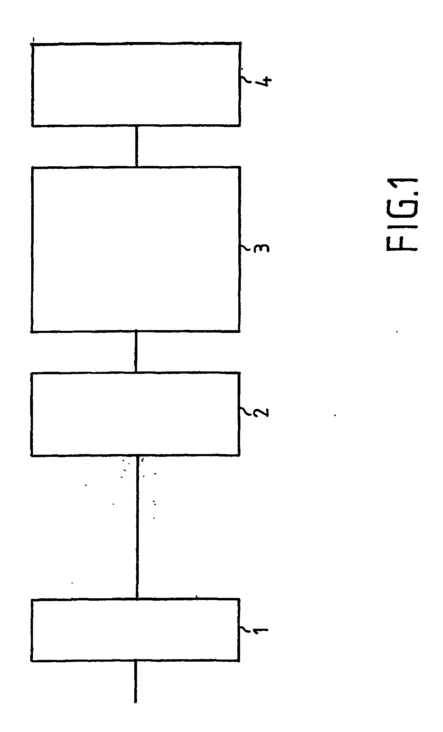

Fig 1. represents a linear transformer according to the state of the art, whereby an analog to digital converter 1 periodically converts an analog signal into a digital signal. The row of measured values is stored in a memory 2. Every time a new value is added to the memory 2, a linear transformer 3 transforms the new row, of which one value has disappeared and one value has been added, into a row of new transform results, which new transform results are stored in a memory 4 for subsequent use. Transformer 3 is arranged such that for obtaining a new transform result, the previous transform result is corrected. This correction is illustrated with the help of a few examples, in which N is chosen to be 4, for ease of illustration.

A possible linear transformation (α_{i,j}), operating on a row of numbers I₀,I₁,.... and producing a row of numbers U₀,U₁,....can be written as:

| | | | | | |
|---|---|---|---|---|---|
| U₀ | α₀₀ | α₀₁ | α₀₂ | α₀₃ | I₀ |
| U₁ | α₁₀ | α₁₁ | α₁₂ | α₁₃ | I₁ |
| U₂ | α₂₀ | α₂₁ | α₂₂ | α₂₃ | I₂ |
| U₃ | α₃₀ | α₃₁ | α₃₂ | α₃₃ | I₃ |
| U₄ | | | | | I₄ |
| . | | | | | . |
| . | | | | | . |

The row Iᵢ is for example a row of measurements originating from an analog to digital converter and is represented as a set of 12-bits binary numbers. The row Uᵢ can be a spectrum derived from the row Iᵢ. The transformation is performed on the row Iᵢ in a well-known manner by multiplying it with the matrix (α_{i,j}). This computation requires 16 multiplications and 12 additions, according to the state of the art. Once a transform result is available, the next transform result can be obtained with a minimum of computations, if the matrix has the special property that the (i-1)^{th} column can be obtained from the i^{th} column of the same matrix by multiplying the i^{th} column with a fixed correction vector. This is in particular true for the Fourier transformation, which may be represented by a matrix:

| | | | | |
|---|---|---|---|---|
| W⁰ | W⁰ | W⁰ | W⁰ | |
| W⁰ | W¹ | W² | W³ | |
| W⁰ | W² | W⁴ | W⁶ | |
| W⁰ | W³ | W⁶ | W⁹ | with W = e^{-j2π/4} |

It easily follows that the correction column for this Fourier transformation is:

| |
|---|
| W⁰ |
| W⁻¹ |
| W⁻² |
| W⁻³ |

The new transform result is obtained in three correction steps. First, the effect of I₀ must be eliminated. This is done by subtracting the contribution of I₀ to the earlier result, i.e. I₀ times the first column of the transformation matrix. Then the result must be multiplied with the correction column, which transforms the i^{th} column in the matrix to the (i-1)^{th} column, as a result of which the former addition of columns remains valid in the new situation. Finally the effect of I_{N}, in this example I₄, must be included. This is done by adding I₄ times the last column of the matrix to the result. A Fourier transformation executed in this manner makes it possible to transform continuously a row of measurements, even if N is large.

For some transforms applications, one may prefer one calculation after for example two new measurements. For the correction, the effect of the first two measurements must be eliminated in the same manner, then a multiplication must be performed with the second power of the correction column and then the effect of the last two measurements must be included.

In many cases only the amplitude of the transform result is of importance, for example when a spectrum is determined. In that case the second step, the multiplication with the correction vector, can be omitted. The multiplication of the next measurement value is in this case performed with a continually changing last column, instead of a fixed last column, which is selected cyclically from a fixed set of N last-column vectors. This can be performed by multiplying the next measurement value with (N+1)^{th}, (N+2)^{th}, (N+3)^{th} column and so on. For that purpose the. matrix can be extended in an obvious way, by adding columns, making use of the correction vector for generating these new columns. In this way a new transformation is obtained with only 2xN parallel sets of multiplications or, in the case of the DFT, with only N parallel sets of multiplications.

More in general the methods described above with reference to the Fourier transformation can be used for all kinds of transformations that may be represented by a matrix for which the (i-1)^{th} column can be obtained by multiplying the i^{th} column with a fixed correction column. This observation forms a basis for the addition of a weighting function to the method described, which significantly broadens the field of application. The weighting is introduced into the matrix by multiplying the columns with suitably chosen weighting constants. Also for a weighted matrix the requirement holds that the (i-1)^{th} column can be obtained by multiplying the i^{th} column with a fixed correction column. It is immediately clear then that the weighting constant for the (i-1)^{th} column must be obtained by multiplying the weighting constant of the i^{th} column with a constant C. For a real constant C the choices are: C<1, C=1 or C>1. For C=1 no weighting is obtained. For positive C<1 the amplitudes of the successive columns of the weighted matrix will increase. For C>1 the amplitudes of the successive columns of the weighted matrix will decrease.

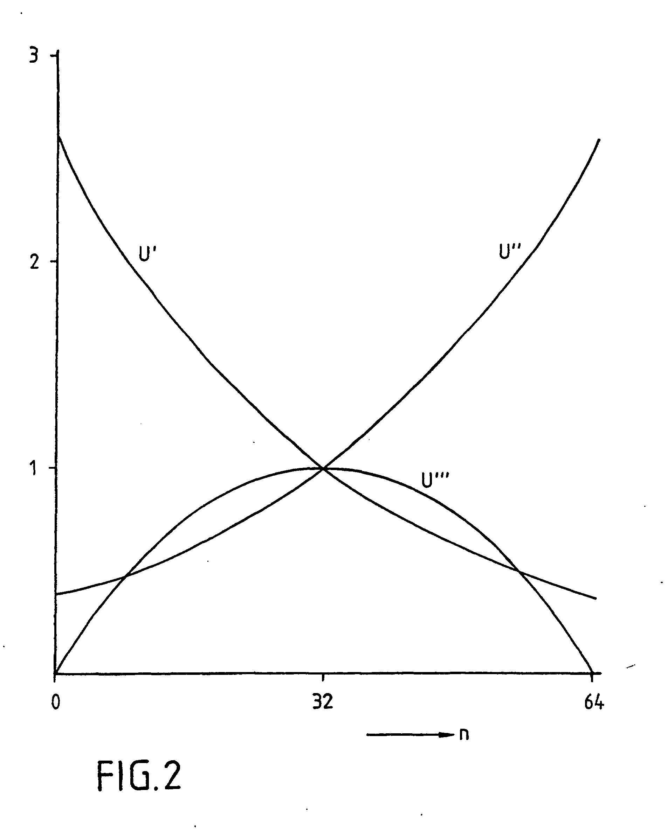

We define a new matrix U' derived from the old NxN matrix U in the following way: the first column is multiplied by C^{[(1-N)/2]}, the second with C^{[1+(1-N)/2]}, the third with C^{[2+(1-N)/2]}, ... and the last with C^{[(N-1)+(1-N)/2]}. We further define a new matrix U'' derived from the old NxN matrix U in the following way: the first column is multiplied by C^{-[(1-N)/2]}, the second by C^{-[1+(1-N)/2]}, the third with C^{-[2+(1-N)/2]}... and the last with C^{-[(N-1)+(1-N)/2]}. With for example C=0.8 is U' a matrix with a skew weighting, for which the amplitude of the first column is the largest of the column amplitudes, the amplitude of the second column is smaller and the amplitude of the last column is the smallest. For U'' on the other hand the first column amplitude is small and the last column amplitude is large. For most practical applications the column amplitudes of the matrix U' are identical to the column amplitudes of the matrix U", but with the columns arranged in reversed order. We now define a weighted matrix as U'''= kU - U' -U''. The corresponding weighting functions U', U'' and U''' are shown in Fig. 2 for N=64, C=0.97 and k=3. The actual weighting function U''' is symmetric and for this value of C nearly null on the extreme ends. A weighting function on a pedestal is easily obtained by choosing a different value for C, while the value in the centre may be corrected by selecting a different value for k. For a small N one must select C smaller in order to obtain a sufficient weighting. For N=8 for example, C=0.7 produces a good weighting.

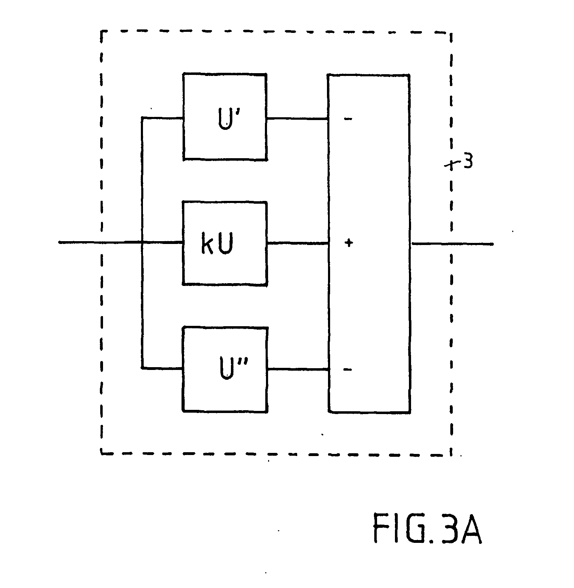

Fig. 3A shows a weighted transformator 3 with real weighting values, in which now three transformations have to be performed, namely a transformation with the matrix U', a transformation with the matrix kU and a transformation with the matrix U", after which the result - U'+ kU - U'' can be determined. For the transformations U' en U'' the correction columns that are used for correcting an earlier value in order to obtain an actual value are now respectively:

| | | | | |
|---|---|---|---|---|
| C⁻¹ | W⁰ | | C | W⁰ |
| C⁻¹ | W⁻¹ | and | C | W⁻¹ |
| C⁻¹ | W⁻² | | C | W⁻² |
| C⁻¹ | W⁻³ | | C | W⁻³ |

Alternatively we may define a new matrix U' derived from the old NxN matrix U in the following way: the first column is multiplied by e^{j2π/(N+1)}, the second with e^{2j2π/(N+1)} ... and the last with e^{Nj2π/(N+1)}. We further define a new matrix U" derived from the old NxN matrix U in the following way: the first column is multiplied by e^{-j2π/(N+1)}, the second by e^{-2j2π/(N+1)} ... and the last with e^{-Nj2π/(N+1)}.We now define a weighted matrix as U'''= kU - AU' -AU''. When we select k=0.5, A=0.25, then we obtain the well known Hanning weighting. With other selections, most of the popular weightings can be realized, for example a weighting on a pedestal.

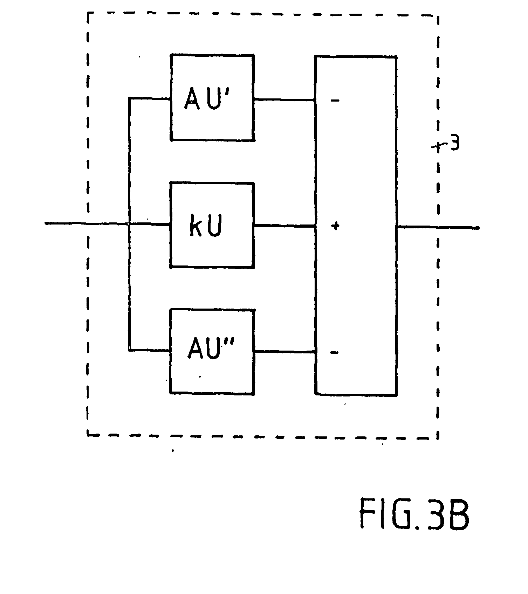

Fig. 3B represents a weighted transformer with complex weighting values, in which now three transformations have to be performed, namely a transformation with the matrix AU', a transformation with the matrix kU and a transformation with the matrix AU'', after which the result -AU'+ kU - AU'' can be determined. For the transformations U' en U'' the correction columns that are used for correcting an earlier value in order to obtain an actual value are now respectively:

| | | | | |
|---|---|---|---|---|
| e^{-j2π/(N+1)} | W⁰ | | e^{j2π/(N+1)} | W⁰ |
| e^{-j2π/(N+1)} | W⁻¹ | and | e^{j2π/(N+1)} | W⁻¹ |
| e^{-j2π/(N+1)} | W⁻² | | e^{j2π/(N+1)} | W⁻² |
| e^{-j2π/(N+1)} | W⁻³ | | e^{j2π/(N+1)} | W⁻³ |

It goes without saying that the definitions as given here for the matrices U' en U" are only examples and that these examples in fact represent classes of weighted matrices.

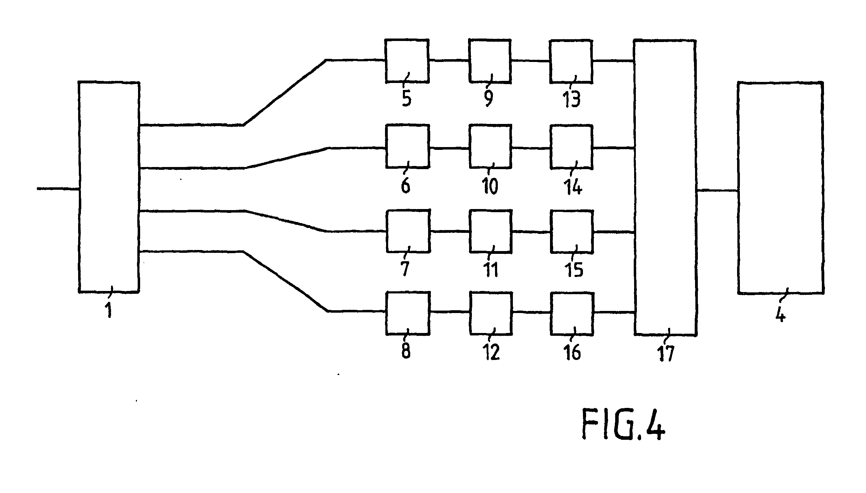

Fig. 4 represents an example of a linear transformer according to the invention, whereby an analog to digital converter 1 periodically converts an analog signal into a four bits digital signal. In this example, each bit position in the set of four-bit measurement values is processed as a separate, one-bit signal. To accomplish this, the four one-bit signals are written to four memories 5, 6, 7, 8, after which four identical linear transformers 9, 10, 11, 12 transform these one-bit signals into four rows of intermediate results. These four rows of intermediate results are weighted by the weight factors 8, 4, 2, and 1 in multipliers 13, 14, 15, 16 and summed in an adder 17, after which the row of transformed measurement values is stored in memory 4 for subsequent use. Due to the fact that the multipliers 13, 14, 15, 16 multiply with the weight factors 8, 4, 2, and 1, they effectively shift the intermediate results by 3, 2, 1, or 0 bits. Furthermore, it should be noticed that the linear subtransformers 9, 10, 11, 12 are identical, so it is feasible to use a single linear subtransformer to process all four of the one-bit signals sequentially. In this example a linear transformer transforms one-bit signals, which implies that the correction of a previously obtained transformation contains the steps of conditionally subtracting the first column of the matrix, multiplying the result with the correction vector and conditionally adding the last column of the matrix. If only the amplitude of the transform result is of importance, then the multiplication with the correction vector can be omitted as explained earlier. In that case only a conditional subtraction and a conditional addition are required for generating a new transform result.

## Claims

1. Computer-implemented method for performing an N-points linear weighted transformation with N=2, 3,..., upon a row of numbers X₁,..,X_{N}, which N-points transformation is performed by multiplying the row of numbers with a matrix which has the property that the (i+1)^{th} column can be obtained from the i^{th} column of the same matrix by multiplying the i^{th} column with a fixed correction vector, **characterized in that** the weighted transformation is realised or approximated by a sum of at least a partial transformation U', a partial transformation U", and a partial transformation kU, in such a way that each partial transformation has the property that an (i+1)^{th} column from a matrix that represents the partial transformation can be obtained from the i^{th} column of the same matrix by multiplying the i^{th} column with a fixed correction vector.

2. Method according to claim 1, **characterized in that** the elements of the correction vector of a partial transformation can be obtained by dividing the elements of the second column of the partial transformation matrix by the corresponding elements of the first column of the partial transformation matrix.

3. Method according to claim 1, **characterized in that** the matrix of the partial transformation U' is obtained by multiplying the successive columns with powers of a real constant C, with C<1, and that the matrix of the partial transformation U" is obtained by multiplying the successive columns with powers of a real constant C⁻¹.

4. Method according to claim 1, **characterized in that** the matrix of the partial transformation U' is obtained by multiplying the successive columns with powers of a complex number D, with D= e^{jx} and that the matrix of the partial transformation U'' is obtained by multiplying the successive columns with powers D⁻¹.

5. Method according to claim 4, **characterized in that** D= e^{j2π/(N+1)}.

6. Method according to one of the claims 1-3, **characterized in that** the calculation of a partial transformation contains the steps of subtracting from the previously computed transformation the product of Xᵢ and the first column of the matrix and adding the product of X_{i+N} and the next column of an extended matrix, of which added columns have the property that the (i+1)^{th} column can be obtained from the i^{th} column of the same matrix by multiplying the i^{th} column with a vector which is the inverse of the fixed correction vector.

7. Method according to one of the previous claims, **characterized in that** a row of M-bits binary numbers X₁,..,X_{N},... is split-up in M rows of one bit binary numbers, that a transformation is performed separately on each of the M rows and that the results are combined in a weighted addition.

8. Linear transformer, designed for the execution of a method as claimed in one of the previous claims.

## Patentansprüche

1. Computer-implementiertes Verfahren zur Ausführung einer linearen, gewichteten N-Punkt-Transformation, mit N=2,3,..., auf einer Reihe von Zahlen X₁,..,X_{N}, welche N-Punkt-Transformation ausgeführt wird, indem man die Zahlenreihe mit einer Matrix multipliziert, welche Matrix die Charakteristik aufweist, dass sich die (i+1)-te Spalte aus der i-ten Spalte derselben Matrix ergibt, indem man die i-te Spalte mit einem festen Korrektionsvektor multipliziert, **dadurch gekennzeichnet, dass** die gewichtete Transformation mittels einer Summierung von zumindest einer partiellen Transformation U', einer partiellen Transformation U" und einer partiellen Transformation kU so realisiert oder approximativ realisiert wird, dass jede partielle Transformation die Charakteristik aufweist, dass sich eine (i+1)-te Spalte von einer die partielle Transformation darstellenden Matrix aus der i-ten Spalte derselben Matrix ergibt, indem man die i-te Spalte mit einem festen Korrektionsvektor multipliziert.

2. Verfahren gemäß Anspruch 1, **dadurch gekennzeichnet, dass** die Elemente des Korrektionsvektors einer partiellen Transformation zu ermitteln sind, indem man die Elemente der zweiten Spalte der partiellen Transformationsmatrix durch die korrespondierenden Elemente der ersten Spalte der partiellen Transformationsmatrix dividiert.

3. Verfahren gemäß Anspruch 1, **dadurch gekennzeichnet, dass** die Matrix der partiellen Transformation U' ermittelt wird, indem man die aufeinander folgenden Spalten mit den Zahlenwerten einer reellen Konstante C⁻¹ multipliziert, mit C<1, und dass die Matrix der partiellen Transformation U'' ermittelt wird, indem man die aufeinanderfolgenden Spalten mit den Werten einer reellen Konstante C⁻¹ multipliziert.

4. Verfahren gemäß Anspruch 1, **dadurch gekennzeichnet, dass** die Matrix der partiellen Transformation U' ermittelt wird, indem man die aufeinander folgenden Spalten mit den Werten einer komplexen Zahl D multipliziert, mit D= e^{jx}, und dass die Matrix der partiellen Transformation U" ermittelt wird, indem man die aufeinander folgenden Spalten mit den Zahlenwerten D⁻¹ multipliziert.

5. Verfahren gemäß Anspruch 4, **dadurch gekennzeichnet, dass** D= e^{j2π/(N+1)}.

6. Verfahren gemäß einem der Ansprüche 1-3, **dadurch gekennzeichnet, dass** in der Berechnung einer partiellen Transformation die Subtraktionen der vorher berechneten Transformation, das Produkt von Xᵢ sowie die erste Spalte der Matrix enthalten sind, indem man das Produkt von X_{i+N} und der nächsten Spalte einer erweiterten Matrix addiert, welche addierten Spalten die Charakteristik aufweisen, dass sich die (i+1)-te Spalte aus der i-ten Spalte derselben Matrix ergibt, indem man die i-te Spalte mit einem Vektor multipliziert, wobei es sich um den reziproken Wert des festen Korrektionsvektors handelt.

7. Verfahren gemäß einem der vorangehenden Ansprüche, **dadurch gekennzeichnet, dass** eine Reihe von M-bit-Binärzahlen X₁,..,X_{N},... in M Reihen von Einbit-Binärzahlen aufgeteilt wird, und dass eine Transformation separat auf jeder der M Reihen ausgeführt wird, und dass die Ergebnisse in einer gewichteten Addition kombiniert werden.

8. Lineartransformator zur Ausführung eines Verfahrens gemäß einem der vorangehenden Ansprüche.

## Revendications

1. Procédé mis en oeuvre par ordinateur pour effectuer une transformation linéaire pondérée à N-points avec N=2, 3,..., sur une rangée de nombres X₁, ..., X_{N}, laquelle transformation à N-points est effectuée en multipliant la rangée de nombres par une matrice qui présente la propriété que la (i+1)^{ième} colonne peut être obtenue à partir de la i^{ième} colonne de la même matrice en multipliant la i^{ième} colonne par un vecteur de correction fixe, **caractérisé en ce que** la transformation pondérée est réalisée ou approchée par la somme d'au moins une transformation partielle U', une transformation partielle U" et une transformation partielle kU, de telle manière que chaque transformation partielle présente la propriété que la (i+1)^{ième} colonne d'une matrice qui représente la transformation partielle puisse être obtenue à partir de la i^{ième} colonne de la même matrice en multipliant la i^{ième} colonne par un vecteur de correction fixe.

2. Procédé selon la revendication 1, **caractérisé en ce que** les éléments du vecteur de correction d'une transformation partielle peuvent être obtenus en divisant les éléments de la seconde colonne de la matrice de transformation partielle par les éléments correspondant de la première colonne de la matrice de transformation partielle.

3. Procédé selon la revendication 1, **caractérisé en ce que** la matrice de la transformation partielle U' est obtenue en multipliant les colonnes successives par des puissances d'une constante réelle C, avec C<1, et **en ce que** la matrice de la transformation partielle U" est obtenue en multipliant les colonnes successives par des puissances d'une constante réelle C⁻¹.

4. Procédé selon la revendication 1, **caractérisé en ce que** la matrice de la transformation partielle U' est obtenue en multipliant les colonnes successives par des puissances d'un nombre complexe D, avec D=e^{jx} et **en ce que** la matrice de transformation partielle U" est obtenue en multipliant les colonnes successives par des puissances D⁻¹.

5. Procédé selon la revendication 4, **caractérisé en ce que** D=e^{j2π/(N+1)}.

6. Procédé selon l'une des revendications 1 à 3, **caractérisé en ce que** le calcul d'une transformation partielle contient les étapes consistant à soustraire, de la transformation calculée préalablement, le produit de Xᵢ et de la première colonne de la matrice et à ajouter le produit de X_{i+N} et de la colonne suivante d'une matrice étendue, dont les colonnes ajoutées ont la propriété que la (i+1)^{ième} colonne peut être obtenue à partir de la i^{ième} colonne de la même matrice en multipliant la i^{ième} colonne par un vecteur qui est l'inverse du vecteur de correction fixe.

7. Procédé selon l'une des revendications précédentes, **caractérisé en ce qu'**une rangée de nombres binaires à M-bits X₁, ..., X_{N}, ... est divisée en M rangées de nombres binaires à un bit, **en ce qu'**une transformation est effectuée de manière séparée sur chacune des M rangées et **en ce que** les résultats sont combinés en une addition pondérée.

8. Transformateur linéaire conçu pour l'exécution d'un procédé tel que revendiqué dans l'une des revendications précédentes.
